(19) Europäisches Patentamt

European Patent Office

Office européen des brevets

(11) **EP 1 591 736 A1**

(12) **EUROPEAN PATENT APPLICATION**

(43) Date of publication:
02.11.2005 Bulletin 2005/44

(51) Int Cl.⁷: **F25D 21/00**

(21) Application number: 05102075.8

(22) Date of filing: 16.03.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: 30.04.2004 KR 2004030753

(71) Applicant: **LG ELECTRONICS INC.**
**Seoul (KR)**

(72) Inventors:
• **CHO, Eun-Jun**
**Bukbyeon-Dong, Gimpo Gyeonggi-Do (KR)**

• **JANG, Ji-Young**
**Seongnam, Gyeonggi-Do (KR)**
• **HWANG, Yoon-Jei**
**Seoul (KR)**
• **CHOI, Won-Jae**
**Seoul (KR)**
• **RYU, Yun-Ho**
**Seoul (KR)**

(74) Representative:
**Gille Hrabal Struck Neidlein Prop Roos**
**Patentanwälte**
**Brucknerstrasse 20**
**40593 Düsseldorf (DE)**

(54) **Defrosting method for an air conditioner**

(57) Provided is a defrosting method for an air conditioner capable of improving an efficiency of a heating mode by supplying the heating mode to a user as long as possible in a condition that a frost deposit is hardly generated. For this purpose, the defrosting method for the air conditioner comprises the steps of; establishing a defrosting initiation temperature of the air conditioner; and performing the defrosting operation based on the established defrosting initiation temperature.

FIG. 3

**Description**

BACKGROUND OF THE INVENTION

1. Field of the Invention

The present invention relates to an air conditioner, and particularly, to a defrosting method for an air conditioner using a heat pump.

2. Description of the PriorArt

For an explanation of a defrosting operation of an air conditioner according to the prior art, as an example thereof, it will be explained of a unitary air conditioner using a heat pump which has been frequently used recently.

The unitary air conditioner is a type of a centralized heating/cooling system in which a heating/cooling equipment using a heat pump is installed in a basement of a factory, an office, a hotel, or a house, cold or hot blast is generated by using the heating/cooling equipment, and the cold or hot blast is delivered and provided to each individual space through a duct mounted in a wall or a ceiling of a building.

The unitary air conditioner classifies an area where requires a heating or a cooling and an area where does not require it into the individual zones. A zone controller is installed between the duct and the heating/cooling equipment in order to supply the hot or cold blast to each individual zone, independently, or a plurality of heating/cooling equipment are installed separately according to the number of the zones.

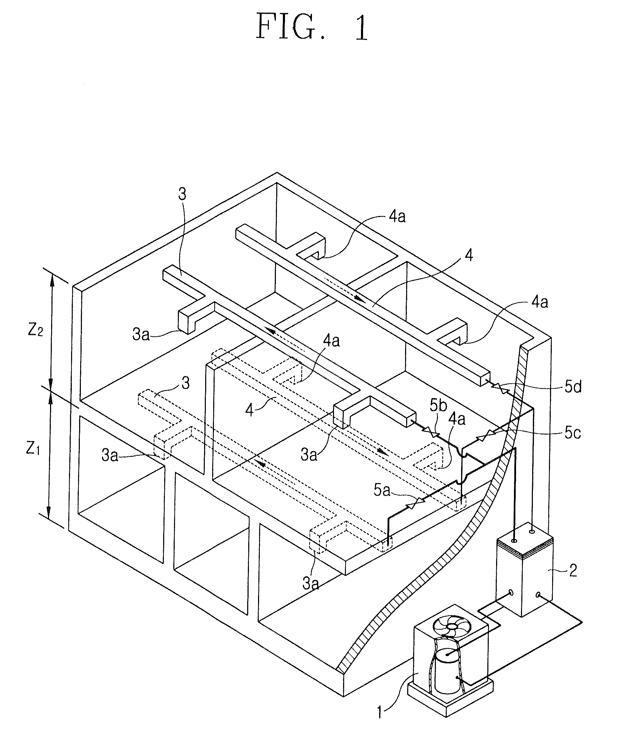

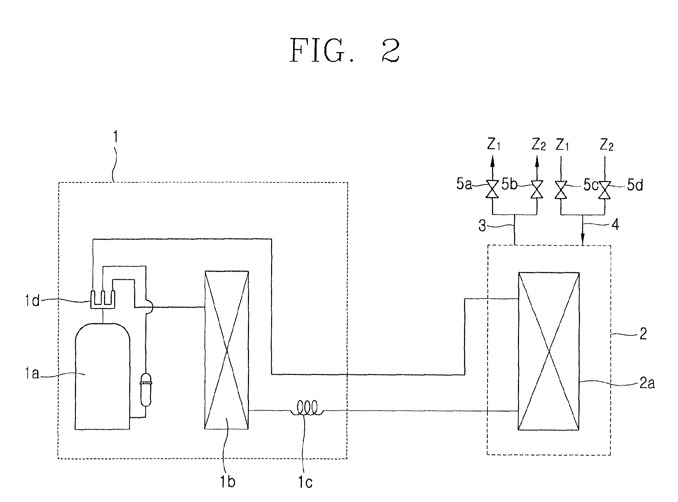

Hereinafter, it will be explained of a structure and an operation of a unitary air conditioner using a heat pump of the prior art with reference to Figures 1 and 2.

Figure 1 is a perspective diagram showing a unitary air conditioner using a heat pump of the prior art which is installed at a building.

Figure 2 is a schematic diagram showing the unitary air conditioner using the heat pump of the prior art.

Referring to Figures 1 and 2, the unitary air conditioner using the heat pump of the prior art, for instance in case of a second-story building, includes: an exterior unit 1 fixedly-installed at an outside of the building; a cold/hot air generator 2 connected to an exterior heat exchanger 1b of the exterior unit 1 through a refrigerant pipe, and installed indoors such as a basement of the building or an outshot; a supply duct 3 and an exhaust duct 4 connected to each air supply opening and an air exhaust opening and mounted in walls and ceilings of each story of the building; and zone controllers 5a through 5d installed between the supply duct 3 and the exhaust duct 4 and the cold/hot air generator 2, for identifying and controlling a supply and an exhaust to each story.

The exterior unit 1 is composed of: one or more compressors 1a installed in a case, for compressing refrigerant gas; an exterior heat exchanger 1b connected to the compressor 1a through the refrigerant pipe, for condensing the refrigerant gas and discharging heat from the refrigerant gas during a cooling mode, and for sucking latent heat from ambient air and evaporating the refrigerant gas; an expander 1c for decompression-expanding the refrigerant gas; a four-way valve 1d connected to the compressor 1a and the exterior heat exchanger 1b, for switching a circulating direction of the refrigerant; and an outdoor fan (not shown) for supplying external air into the exterior heat exchanger 1b and thus improving a heat exchanging performance of the exterior heat exchanger 1b.

The cold/hot air generator 2 is composed of in the case thereof: an interior heat exchanger 2a, of which one end is connected to the four-way valve 1d and simultaneously the other end is connected to the expander 1c; a supply fan (not shown) for inducing cold or hot blast to the supply duct 3; an air supply opening (not shown) connected to the supply duct 3; and an air exhaust opening (not shown) connected to the exhaust duct 4.

The supply duct 3 and the exhaust duct 4, as aforementioned, are connected to the air supply opening and the air exhaust opening of the cold/hot air generator 2 and separately-mounted in walls and ceilings of each story Z1 and Z2 of the building. In the supply duct 3 and the exhaust duct 4, there are formed an outlet 3a for supplying cold blast or hot blast into spaces of each story Z1 and Z2, and an inlet 4a for sucking indoor air in order to circulate the indoor air of the respective spaces.

The zone controllers 5a through 5d refer to a type of valve installed in the middle of the supply duct 3 and in the middle of the exhaust duct 4, in order to identify the cold or hot blast and supply it to the respective stories Z1 and Z2. The zone controllers 5a through 5d are connected to a control unit (not shown) or driven manually, by which a temperature or a humidity of a corresponding zone is detected to compare the detected value with a preset value and thus the zone controllers 5a through 5d can be on/off controlled on the basis of the compared result.

Hereinafter, it will be explained of an operation of the aforementioned unitary air conditioner using a heat pump of the prior art.

The air conditioner of the prior art, in case of a second-story house, detects a load of each story Z1 and Z2, and thus identifies cold or hot blast to supply it through each supply duct 3 based on the detected value.

For instance, during a cooling mode, the compressor 1a of the exterior unit 1 is driven to compress refrigerant gas and leads it to a state of high temperature and a high pressure. The compressed refrigerant gas is then moved to the exterior heat exchanger 1b by the four-way valve 1 d. Accordingly, the compressed refrigerant gas moved into the exterior heat exchanger 1b is chilled and condensed in the exterior heat exchanger 1 b to be a liquid in a state of a low temperature. At this time, the exterior heat exchanger 1b is used as a condenser. Afterwards, the condensed refrigerant passes through the expander 1c to be a state of a low temperature and a low pressure, and accordingly comes into the interior heat exchanger 2a of the cold/hot air generator 2. In the interior heat exchanger 2a, the refrigerant of the low temperature and pressure is heat-exchanged with indoor air sucked to an air path through the exhaust duct 4. In the interior heat exchanger 2a, the refrigerant relatively cold with comparison to the indoor air absorbs latent heat from the indoor air and accordingly cools the indoor air, thereafter being evaporated. The cooled indoor air is moved to the supply duct 3 through the air supply opening by a supply fan of the cold/hot air generator 2. Here, the interior heat exchanger 2a of the cold/hot air generator 2 is used as an evaporator. During this, if every load values of each story Z1 and Z2 are greater than a preset value, in case of an automatic mode, each zone controller is in an on-state automatically by the control unit, while, in case of a manual mode, each zone controller becomes the on-state by a handling of a user. In response to this, the cold air supplied from the cold/hot air generator 2 is discharged through each outlet 3a of each supply duct 3, thereby cooling both stories. On the other hand, a load value detected from one of the stories is lower than the preset value, a zone controller having the detected load value greater than the preset value becomes the on-state, and accordingly the cold air is moved only to the supply duct 3 of the story corresponding to a zone where the zone controller has been turned on, thereby cooling the corresponding story.

During a heating mode, on the other hand, the operation is the same as that during the cooling mode, however, the refrigerant is circulated in a heating cycle by switching the four-way valve 1d. That is, the refrigerant is circulated in a reverse order of the cycle of the refrigerant in the cooling mode. Therefore, in the air conditioner using the heat pump of the prior art, during a heating mode, the exterior heat exchanger 1b is used as the evaporator, while the interior heat exchanger 2a is used as the condenser.

In addition to the air conditioner using the heat pump, in all types of cooling/heating air conditioner using the heat pump having the interior and exterior heat exchangers, the interior heat exchanger is used as the evaporator and the exterior heat exchanger is used as the condenser during a cooling mode. While the interior heat exchanger is used as the condenser and the exterior heat exchanger is used as the evaporator during a heating mode.

When the unitary air conditioner using the heat pump is operated in the heating mode, in case that a temperature of outdoor air is low and a humidity thereof is high, the exterior heat exchanger 1b is used as the evaporator. In response to this, the refrigerant absorbs the latent heat from the ambient air and then is evaporated, thereby cooling a pipe of the exterior heat exchanger 1b and the air therearound. As a result, dampness in the air is deposited on the pipe of the exterior heat exchanger 1 b. At this time, the air conditioner prevents a damage on the pipe of the exterior heat exchanger 1 b due to the frost deposit and performs a defrosting operation for preventing a degradation of a heating efficiency due to a falling of an evaporating temperature of the refrigerant in the exterior heat exchanger 1b.

In other words, in the unitary air conditioner using the heat pump, in case that an outdoor humidity is higher than a preset humidity, when an outdoor temperature is lower than the preset temperature and a pipe temperature of the exterior heat exchanger falls less than the preset temperature (namely, a temperature as a basis for initiating the defrosting operation), the four-way valve is switched from the heating mode to the cooling mode to stop an operation of the heating cycle and rather to operate the cooling cycle. Then, for a certain time, the defrosting operation is performed for removing the frost on the pipe of the exterior heat exchanger. For instance, in the air conditioner of the prior art, in a state that the outdoor humidity is higher than the preset humidity, when the preset temperature is -15°C, if the outdoor temperature falls lower than the preset temperature of -15°C, the four-way valve is switched from the heating mode to the cooling mode thereby to operate it. In response to this, the defrosting operation is performed for a certain time.

As aforementioned, in the air conditioner of the prior art, the defrosting operation in the heating mode is performed when the pipe temperature of the exterior heat exchanger falls less than the preset temperature. Here, if the preset temperature as a standard for initiating the defrosting operation is set too high, the pipe temperature is lower than the preset temperature in case that the outdoor temperature is lower than the preset temperature. As a result of this, the pipe temperature is always lower than the preset temperature, and accordingly the defrosting operation may be performed even though a dampness is not deposited on the pipe of the exterior heat exchanger. On the other hand, if the preset temperature is set too low, the defrosting operation may not be initiated even though the dampness is deposited on the pipe of the exterior heat exchanger. As a result, the evaporating temperature and condensing temperature of the refrigerant are lowered thereby to fall a temperature of air come into a building.

SUMMARY OF THE INVENTION

Therefore, an object of the present invention is to provide a defrosting method for an air conditioner capable

**EP 1 591 736 A1**

of preventing an evaporating temperature and a condensing temperature of a refrigerant from being lowered by establishing a defrosting initiation temperature for supplying a heating mode time to a user as long as possible in a state of a low temperature at which a frost deposit is hardly generated on the basis of an outdoor temperature, a pipe temperature of an exterior heat exchanger and a compression capacity of a compressor, and by performing the defrosting operation based on the established defrosting initiation temperature.

To achieve these and other advantages and in accordance with the purpose of the present invention, as embodied and broadly described herein, there is provided a defrosting method for an air conditioner comprising the steps of: establishing a defrosting initiation temperature of the air conditioner; and performing the defrosting operation based on the established defrosting initiation temperature.

According to another embodiment of the present invention, there is provided a defrosting method for an air conditioner comprising the steps of: detecting an outdoor temperature and a pipe temperature of an exterior heat exchanger during a heating mode; establishing a defrosting initiation temperature on the basis of the detected outdoor temperature, the detected pipe temperature and a compression capacity of a compressor; and performing the defrosting operation based on the detected pipe temperature and the established defrosting initiation temperature.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is a perspective diagram illustrating a unitary air conditioner using a heat pump of the prior art installed in a building;
Figure 2 is a schematic diagram illustrating the unitary air conditioner using the heat pump of the prior art; and

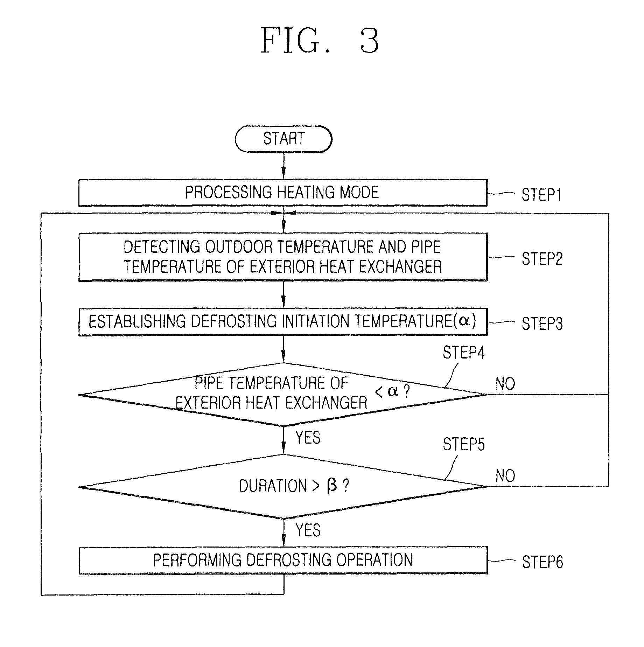

Figure 3 is a flow chart illustrating a defrosting method for an air conditioner according to the present invention.

DETAILED DESCRIPTION OF THE PREFERRED EMBODIMENTS

Reference will now be made in detail to the preferred embodiments of the present invention, examples of which are illustrated in the accompanying drawings.

With reference to Figure 3, it will be explained of an embodiment of a defrosting method for an air conditioner capable of preventing an evaporating temperature and a condensing temperature of a refrigerant from being lowered by establishing a defrosting initiation temperature for supplying a heating mode time to a user as long as possible in a state of a low temperature at which a frost deposit is hardly generated on the basis of an outdoor temperature, a pipe temperature of an exterior heat exchanger and a compression capacity of a compressor, and by performing the defrosting operation based on the established defrosting initiation temperature.

Figure 3 is a flow chart illustrating an embodiment of a defrosting method for an air conditioner according to the present invention.

In the present invention, a defrosting method for an air conditioner comprising a compressor, an exterior heat exchanger, an interior heat exchanger, an expander and a four-way valve includes the steps of: initiating a heating when a user selects the heating mode (STEP 1); detecting an outdoor temperature and a pipe temperature of an exterior heat exchanger (STEP 2); establishing a defrosting initiation temperature ($\alpha$) on the basis of the detected outdoor temperature and a compression capacity of the compressor (STEP 3); determining whether the detected pipe temperature is lower than the established defrosting initiation temperature ($\alpha$), and determining whether a duration of the state that the detected pipe temperature is lower than the established defrosting initiation temperature ($\alpha$) is longer than a preset time ($\beta$) when it is determined that the detected pipe temperature is lower than the established defrosting initiation temperature ($\alpha$), while returning to STEP 2 (namely, the step of detecting the outdoor temperature and the pipe temperature of the exterior heat exchanger) (STEP 4) when it is determined that the detected pipe temperature is the same to or higher than the established defrosting initiation temperature ($\alpha$); determining whether the duration of the state that the pipe temperature is lower than the established defrosting initiation temperature ($\alpha$) is longer than the preset time ($\beta$), and initiating a defrosting operation when it is determined that the duration of the state that the pipe temperature is lower than the established defrosting initiation temperature ($\alpha$) is longer than the preset time ($\beta$), while returning to STEP 2 (namely, the step of detecting the outdoor temperature and the pipe temperature of the exterior heat exchanger) (STEP 5) when it is determined that the duration of the state that the pipe temperature is lower than

4

the established defrosting initiation temperature ($\alpha$) is the same to or shorter than the preset time ($\beta$); and performing the defrosting operation (STEP 6).

It will be now explained in more detail of the defrosting method for the air conditioner according to the present invention with reference to preferred embodiments.

In the defrosting method for the air conditioner according to the present invention, the defrosting initiation temperature can be established on the basis of: one aspect that, in a heating mode without a frost deposit, an outdoor temperature and an evaporating temperature (i.e., a pipe temperature of the exterior heat exchanger) of a refrigerant have a uniform difference therebetween regardless of an indoor temperature and the outdoor temperature according to an operation of a compressor of the air conditioner, and the frost deposit is generated on the pipe of the exterior heat exchanger and keeps going on to fall the evaporating temperature, thereby increasing the difference between the outdoor temperature and the evaporating temperature; and another aspect that, in the heating mode without a frost deposit, the greater a compression capacity of the compressor is, the lower the evaporating temperature is established (namely, if the compression capacity of the compressor is greater and greater, the refrigerant can be evaporated at a low temperature).

Here, the defrosting initiation temperature is established based on the compression capacity of the compressor and the outdoor temperature. If an inverter compressor is used as the compressor, the compression capacity of the compressor can be indicated as an operational frequency of the inverter compressor. If a plurality of compressors are rather used as the compressor, the compression capacity of the compressor can be indicated as an operational combination of the compressor according to the number of the plurality of compressors.

It will be explained in detail of a method for establishing a defrosting initiation temperature in the defrosting method for the air conditioner according to the present invention as follows.

Table 1 denotes a defrosting initiation temperature according to an operational frequency of a compressor in the air conditioner when an outdoor temperature is in a state of a dry bulb temperature of 1°C and a wet bulb temperature of 1°C and an indoor temperature is in a state of the dry bulb temperature of 20°C and the wet bulb temperature 15°C in a heating mode of the air conditioner.

[Table 1]

| Operational combination (Operational frequency of compressor) | Pipe temperature of exterior heat exchanger without frost deposit (i.e., evaporating temperature without frost deposit | [(Pipe temperature of exterior heat exchanger) -(outdoor temperature) = TD | (Defrosting initiation temperature) = TD $\times$ 2 |
|---|---|---|---|
| 50Hz | -4°C | (-4)-(1)=-5°C | (-5$\times$2)=-10°C |
| 77Hz | -5°C | (-5)-(1)=-6°C | (-6$\times$2)=-12°C |
| 122Hz | -7°C | (-7)-(1)=-8°C | (-8$\times$2)=-16°C |

The defrosting initiation temperature is obtained by multiplying the TD by a value preset through an experiment. As an embodiment therefor, the defrosting initiation temperature in Table 1 has been obtained by multiplying the TD by 2.

Here, the air conditioner initiates a defrosting operation when a value obtained by subtracting the detected outdoor temperature from the pipe temperature of the exterior heat exchanger maintains a state of being smaller than the defrosting initiation temperature (TD $\times$ 2) for more than a preset time (e.g., 5 minutes).

Inequality 1 shows a condition of the defrosting operation herebelow.

$$T_{e\text{-}pipe} - T_e < TD \times 2 \qquad \text{Inequality 1}$$

Here, $T_{e\text{-}pipe}$ denotes a pipe temperature of the exterior heat exchanger, and $T_e$ denotes the outdoor temperature.

At this time, the defrosting operation is set to be initiated only in case that the outdoor temperature is lower than 15°C and the pipe temperature of the exterior heat exchanger is lower than 0°C. In response to this, the defrosting operation is prevented from being initiated in a condition that the frost deposit is not generated.

Indicating the defrosting initiation temperature in an equation according to an operational combination of the compressor by using a regression analysis tool, it can be seen from a pattern of "TD $\times$ 2 = a + b x (an operational frequency of the compressor)", in which the values for the 'a' and the 'b' correspond to -4.4 and -0.09, respectively, according to the values shown in Table 1.

Therefore, "a + b × (the operational frequency of the compressor)" is substituted for the TD × 2 of Inequality 1 and arranged with respect to $T_{e\text{-pipe}}$. As a result of this, Inequality 2 herebelow can be obtained thereby.

$$T_{e\text{-pipe}} < a + bx + T_e \qquad\qquad \text{Inequality 2}$$

Here, $T_{e\text{-pipe}}$ denotes an pipe temperature of the exterior heat exchanger, $T_e$ denotes an outdoor temperature, 'a and b' denote values obtained through an experiment, and 'x' denotes the operational frequency of the compressor.

That is, the air conditioner according to the present invention initiates the defrosting operation when $T_{e\text{-pipe}}$ (i.e., the pipe temperature of the exterior heat exchanger detected during a heating mode) is smaller than a + bx + $T_e$, the state is maintained for more than a preset time. Accordingly, the a + bx + $T_e$ can be established as the defrosting initiation temperature $T_{defrosting}$.

Therefore, the defrosting initiation temperature can be seen from Equation 1 according to the operational combination of the compressor.

$$T_{defrosting} = a + bx + T_e \qquad\qquad \text{Equation 1}$$

Here, $T_{defrosting}$ refers to the defrosting initiation temperature, 'a and b' refer to values obtained through an experiment, 'x' refers to the operational frequency of the compressor, and $T_e$ refers to the outdoor temperature.

When establishing the defrosting initiation temperature, in case of checking whether the state that the pipe temperature of the exterior heat exchanger is lower than the defrosting initiation temperature is maintained for more than a preset time (STEP 5), the pipe temperature can continually fall during the preset time. As a result of this, the defrosting initiation temperature can be obtained by adding a correction factor (e.g., about 2~3°C), considering the case that the pipe temperature continually falls. That is, the defrosting initiation temperature can be obtained by Equation 2 herebelow.

$$T_{defrosting} = a + bx + T_e + c \qquad\qquad \text{Equation 2}$$

Here, $T_{defrosting}$ refers to the defrosting initiation temperature, 'a and b' refer to valued obtained through an experiment, 'x' refers to the operational frequency of the compressor, $T_e$ refer to the outer temperature, 'c' refers to a correction value considering the case that the pipe temperature falls too low.

Hereinafter, it will be explained in more detail of the defrosting method for the air conditioner according to the present invention based on the defrosting initiation temperature.

In the air conditioner according to the present invention, once a heating mode is selected by a user, the heating operation is performed. An outdoor temperature and a pipe temperature of the exterior heat exchanger are then detected during the heating mode in process. (STEP 1 and STEP 2)

Afterwards, a defrosting initiation temperature (α) is established on the basis of the detected outdoor temperature and a compression capacity of the compressor. (STEP 3)

Then, the detected pipe temperature is compared with the established defrosting initiation temperature (α). A duration of the case is compared with a preset time (β) when it is determined from the comparison that the detected pipe temperature is lower than the established defrosting initiation temperature (α) (STEP 5), while, the current operation is returned to the step for detecting the outdoor temperature and the pipe temperature (STEP 2) when it is determined from the comparison that the detected pipe temperature is higher than the established defrosting initiation temperature (α). (STEP 4)

Thereafter, the air conditioner determines whether the state that the detected pipe temperature is lower than the established defrosting initiation temperature (α) is maintained for more than the preset time (β). The defrosting operation is initiated when it is determined that the state that the detected pipe temperature is lower than the established defrosting initiation temperature (α) is maintained for more than the preset time (β) (STEP 6), while the air conditioner returns to the step (STEP 2) of detecting the outdoor temperature and the pipe temperature when it is determined that the state that the detected pipe temperature is lower than the established defrosting initiation temperature (α) is not maintained for more than the preset time (β). (STEP 5)

In case that the pipe temperature is lower than the established defrosting initiation temperature (α), the air conditioner performs the defrosting operation for a certain time when the duration is the same to or longer than the preset time (β) (STEP 6). Then, the frost on the pipe of the exterior heat exchanger is removed, and the heating mode is re-operated, thereafter repeating STEP2 through STEP 6.

In STEP 5, the reason for determining whether the state that the detected pipe temperature is lower than the established defrosting initiation temperature ($\alpha$) is maintained for more than the preset time ($\beta$) is that the evaporating temperature of the refrigerant abnormally falls in case that the system of the air conditioner is not stabilized when the compressor is driven.

In other words, in the present invention, in order to supply a heating operation to a user for a time as long as possible in the condition of a low temperature that a frost deposit is hardly generated, the defrosting initiation temperature is established on the basis of an outdoor temperature, a pipe temperature of an exterior heat exchanger and a compression capacity of a compressor. Then, in case that the pipe temperature is lower than the established defrosting initiation temperature, the defrosting operation is initiated when a duration of the state that the pipe temperature is lower than the established defrosting initiation temperature is longer than the preset time.

As described above, in the present invention, an outdoor temperature and a pipe temperature of an exterior heat exchanger are detected, and a defrosting initiation temperature is established based on the detected outdoor temperature and a compression capacity of a compressor. Then, when the detected pipe temperature is lower than the established defrosting initiation temperature, in case that a duration thereof is longer than a preset time, a defrosting operation is initiated. According to these, a heating efficiency of an air conditioner can be improved and the air conditioner can more effectively correspond to a load.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A defrosting method for an air conditioner comprising the steps of:

   establishing a defrosting initiation temperature of the air conditioner; and
   performing a defrosting operation based on the established defrosting initiation temperature.

2. The method of claim 1, wherein the step of establishing the defrosting initiation temperature of the air conditioner includes the steps of:

   detecting an outdoor temperature while the air conditioner is in a heating mode; and
   establishing the defrosting initiation temperature based on the detected outdoor temperature and a compression capacity of a compressor in the air conditioner.

3. The method of claim 2, wherein the step of performing the defrosting operation based on the established defrosting initiation temperature includes the steps of:

   detecting a pipe temperature of an exterior heat exchanger in the air conditioner;
   comparing the detected pipe temperature with the established defrosting initiation temperature; and
   performing the defrosting operation based on the compared result of the detected pipe temperature and the established defrosting initiation temperature.

4. The method of claim 3, wherein in the step of performing the defrosting operation based on the compared result of the detected pipe temperature and the established defrosting initiation temperature, the defrosting operation is performed when the detected pipe temperature is lower than the established defrosting initiation temperature, while the current operation is returned to the step of detecting the outdoor temperature when the detected pipe temperature is the same to or higher than the established defrosting initiation temperature.

5. The method of claim 4, wherein in the case that the detected pipe temperature is lower than the established defrosting initiation temperature, the defrosting operation has been completed and then the current operation is returned to the step of detecting the outdoor temperature.

6. The method of claim 5, wherein in the defrosting operation, a four-way valve of the air conditioner is switched to change an operational mode of the air conditioner from a cooling mode to a heating mode, thereby performing the defrosting operation for a second preset time, and then the defrosting operation is completed after the second preset time elapses, thereafter returning to the step of detecting the outdoor temperature.

7. The method of claim 3, further comprising the steps of:

in case that the detected pipe temperature is lower than the established defrosting initiation temperature, comparing a first preset time with a duration of the state that the detected pipe temperature is lower than the established defrosting initiation temperature; and
performing the defrosting operation on the basis of the compared result of the duration of the state and the first preset time.

8. The method of claim 7, wherein in the step of performing the defrosting operation based on the duration of the state and the first preset time, when the duration is longer than the first preset time, the defrosting operation is performed until the operation is completed, thereafter returning to the step of detecting the outdoor temperature, while when the duration is the same to or shorter than the first preset time, the current operation is returned to the step of detecting the outdoor temperature.

9. The method of claim 2, wherein the compression capacity of the compressor is obtained based on at least one of the number of compressor and an operational frequency of the compressor.

10. The method of claim 2, wherein the defrosting initiation temperature is obtained by Equation $T_{defrosting}$ = a + bx + $T_e$ + c, wherein $T_{defrosting}$ is the defrosting initiation temperature, 'a and b' are values obtained through an experiment, 'x' is an operational frequency of the compressor, $T_e$ is the detected outdoor temperature, and 'c' is a correction value.

11. The method of claim 10, wherein the equation is obtained by a regression analysis.

12. The method of claim 10, wherein the 'c' is the correction value based on a variation of the outdoor pipe temperature.

13. A defrosting method for an air conditioner comprising the steps of:

detecting an outdoor temperature and a pipe temperature of an exterior heat exchanger in the air conditioner during a heating mode in process;
establishing a defrosting initiation temperature on the basis of the detected outdoor temperature and a compression capacity of a compressor in the air conditioner; and
performing a defrosting operation based on the detected pipe temperature and the established defrosting initiation temperature.

14. The method of claim 13, wherein the step of performing the defrosting operation based on the detected pipe temperature and the established defrosting initiation temperature includes the steps of:

determining whether the detected pipe temperature is lower than the established defrosting initiation temperature;
determining whether a duration of a state that the detected pipe temperature is lower than the established defrosting initiation temperature is longer than a first preset time when the detected pipe temperature is lower than the established defrosting initiation temperature, while returning to the step of detecting the outdoor temperature and the pipe temperature of the exterior heat exchanger when the detected pipe temperature is the same to or higher than the established defrosting initiation temperature; and
initiating the defrosting operation until the operation is completed, thereafter returning to the step of detecting the outdoor temperature and the pipe temperature of the exterior heat exchanger when the duration is longer than the first preset time, while returning to the step of detecting the outdoor temperature and the pipe temperature of the exterior heat exchanger when the duration is the same to or shorter than the first preset time.

15. The method of claim 13, wherein the compression capacity of the compressor is obtained based on at least one of the number of compressor and an operational frequency of the compressor.

16. The method of claim 13, wherein the defrosting initiation temperature is obtained by Equation $T_{defrosting}$ = a + bx + $T_e$ + c, wherein $T_{defrosting}$ is the defrosting initiation temperature, 'a and b' are values obtained through an experiment, 'x' is the operational frequency of the compressor, $T_e$ is the detected outdoor temperature, and 'c' is a correction value.

**17.** The method of claim 16, wherein the 'c' is the correction value based on a variation of the outdoor pipe temperature.

**18.** The method of claim 16, the equation is obtained by a regression analysis.

**19.** The method of claim 14, wherein in the defrosting operation, a four-way valve of the air conditioner is switched from a heating mode to a cooling mode for operating the air conditioner in the cooling mode for a second preset time, thereafter stopping the cooling mode and initiating the heating mode again.

# FIG. 1

FIG. 2

# FIG. 3

```
                        ┌─────────────┐
                        │    START    │
                        └─────────────┘
                               │
                               ▼
        ┌─────────────────────────────────────────────┐
        │          PROCESSING HEATING MODE            │──── STEP1
        └─────────────────────────────────────────────┘
                               │
                               ▼
        ┌─────────────────────────────────────────────┐
        │   DETECTING OUTDOOR TEMPERATURE AND PIPE    │──── STEP2
        │   TEMPERATURE OF EXTERIOR HEAT EXCHANGER    │
        └─────────────────────────────────────────────┘
                               │
                               ▼
        ┌─────────────────────────────────────────────┐
        │ ESTABLISHING DEFROSTING INITIATION TEMPERATURE(α) │──── STEP3
        └─────────────────────────────────────────────┘
                               │                   STEP4
                               ▼
              ◇ PIPE TEMPERATURE OF                           NO
                EXTERIOR HEAT EXCHANGER  < α ? ◇ ─────────────
                               │ YES
                               ▼                   STEP5
                     ◇ DURATION > β ? ◇ ───────────────────── NO
                               │ YES
                               ▼
        ┌─────────────────────────────────────────────┐
        │         PERFORMING DEFROSTING OPERATION      │──── STEP6
        └─────────────────────────────────────────────┘
```

EP 1 591 736 A1

**European Patent Office**

**EUROPEAN SEARCH REPORT**

Application Number

EP 05 10 2075

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 299 361 A (RANCO INCORPORATED OF DELAWARE) 18 January 1989 (1989-01-18) * page 2, line 33 - page 3, line 41; figures 3,4 * | 1 | F25D21/00 |
| X | US 5 319 943 A (BAHEL ET AL) 14 June 1994 (1994-06-14) * column 1, line 66 - column 2, line 12; claim 1; figure 15 * | 1 | |
| X | EP 0 505 315 A (CARRIER CORPORATION) 23 September 1992 (1992-09-23) * column 2, line 30 - line 53; claim 1; figures 2,3 * * column 4, line 1 - line 15 * | 1 | |
| X | US 6 318 095 B1 (GUO CHARLES Z ET AL) 20 November 2001 (2001-11-20) * column 2, line 2 - line 34; claim 1 * | 1 | |
| X | DE 42 43 634 A1 (SAMSUNG ELECTRONICS CO., LTD., SUWON, KR; SAMSUNG ELECTRONICS CO., LTD) 1 July 1993 (1993-07-01) * abstract * | 1 | TECHNICAL FIELDS SEARCHED (Int.Cl.7) F25D F25B F24F |
| X | EP 0 142 663 A (M.A.N. MASCHINENFABRIK AUGSBURG-NURNBERG AKTIENGESELLSCHAFT; M A N TEC) 29 May 1985 (1985-05-29) * abstract * | 1 | |
| X | US 4 406 133 A (SAUNDERS ET AL) 27 September 1983 (1983-09-27) * abstract * | 1 | |
| X | EP 0 364 238 A (HONEYWELL INC) 18 April 1990 (1990-04-18) * abstract * | 1 | |

-/--

The present search report has been drawn up for all claims

| Place of search | Date of completion of the search | Examiner |
|---|---|---|
| Munich | 2 August 2005 | Valenza, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

13

**EP 1 591 736 A1**

**European Patent Office**

**EUROPEAN SEARCH REPORT**

Application Number

EP 05 10 2075

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 011, no. 191 (M-600), 19 June 1987 (1987-06-19) & JP 62 017551 A (MITSUBISHI ELECTRIC CORP), 26 January 1987 (1987-01-26) * abstract * | 1 | |
| X | PATENT ABSTRACTS OF JAPAN vol. 007, no. 227 (M-248), 7 October 1983 (1983-10-07) & JP 58 120035 A (MITSUBISHI JUKOGYO KK), 16 July 1983 (1983-07-16) * abstract * | 1 | |
| X | PATENT ABSTRACTS OF JAPAN vol. 012, no. 067 (M-673), 2 March 1988 (1988-03-02) & JP 62 213637 A (MATSUSHITA ELECTRIC IND CO LTD), 19 September 1987 (1987-09-19) * abstract * | 1 | |

TECHNICAL FIELDS SEARCHED (Int.Cl.7)

The present search report has been drawn up for all claims

| Place of search | Date of completion of the search | Examiner |
|---|---|---|
| Munich | 2 August 2005 | Valenza, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**ANNEX TO THE EUROPEAN SEARCH REPORT
ON EUROPEAN PATENT APPLICATION NO.**                    EP 05 10 2075

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2005

| Patent document cited in search report | | Publication date | Patent family member(s) | | Publication date |
|---|---|---|---|---|---|
| EP 0299361 | A | 18-01-1989 | US | 4882908 A | 28-11-1989 |
| | | | CA | 1325253 C | 14-12-1993 |
| | | | DE | 3852524 D1 | 02-02-1995 |
| | | | DE | 3852524 T2 | 24-05-1995 |
| | | | EP | 0299361 A2 | 18-01-1989 |
| | | | ES | 2064330 T3 | 01-02-1995 |
| | | | JP | 1063744 A | 09-03-1989 |
| | | | MX | 173557 B | 16-03-1994 |
| US 5319943 | A | 14-06-1994 | CN | 1095153 A | 16-11-1994 |
| | | | IL | 108213 A | 18-06-1996 |
| | | | JP | 7305925 A | 21-11-1995 |
| EP 0505315 | A | 23-09-1992 | US | 5257506 A | 02-11-1993 |
| | | | DE | 69212356 D1 | 29-08-1996 |
| | | | DE | 69212356 T2 | 30-01-1997 |
| | | | EP | 0505315 A1 | 23-09-1992 |
| | | | ES | 2092079 T3 | 16-11-1996 |
| US 6318095 | B1 | 20-11-2001 | NONE | | |
| DE 4243634 | A1 | 01-07-1993 | KR | 9500738 B1 | 28-01-1995 |
| | | | CN | 1073760 A ,C | 30-06-1993 |
| | | | JP | 2514774 B2 | 10-07-1996 |
| | | | JP | 6066461 A | 08-03-1994 |
| EP 0142663 | A | 29-05-1985 | DE | 3333907 A1 | 04-04-1985 |
| | | | AT | 38555 T | 15-11-1988 |
| | | | DE | 3475100 D1 | 15-12-1988 |
| | | | EP | 0142663 A2 | 29-05-1985 |
| US 4406133 | A | 27-09-1983 | US | 4338790 A | 13-07-1982 |
| EP 0364238 | A | 18-04-1990 | US | 4916912 A | 17-04-1990 |
| | | | EP | 0364238 A2 | 18-04-1990 |
| | | | JP | 2217766 A | 30-08-1990 |
| JP 62017551 | A | 26-01-1987 | NONE | | |
| JP 58120035 | A | 16-07-1983 | JP | 1485935 C | 14-03-1989 |
| | | | JP | 63033623 B | 06-07-1988 |
| JP 62213637 | A | 19-09-1987 | NONE | | |

EPO FORM P0459

For more details about this annex : see Official Journal of the European Patent Office, No. 12/82